# EUROPEAN PATENT APPLICATION

(11) **EP 4 640 512 A1**
(43) Date of publication of application: **29.10.2025**
(21) Application number: 23905264.0
(22) Date of filing: 07.08.2023
(51) Int. Cl.: B60W 50/02

(54) **METHOD AND APPARATUS FOR HANDLING FAULT IN IMAGE INPUT/OUTPUT SYSTEM, DEVICE AND MEDIUM**

(30) Priority: 19.12.2022 CN 202211637384
(71) Applicant: Shanghai Horizon Intelligent Automotive Technology Co., Ltd., Shanghai Jiading District 201800 (CN)
(72) Inventor: WANG, Chao, Shanghai 201800 (CN); XIE, Xiangnan, Shanghai 201800 (CN); ZHOU, Xueyuan, Shanghai 201800 (CN); ZHAO, Yandong, Shanghai 201800 (CN)
(74) Representative: Patentanwälte Magenbauer & Kollegen Partnerschaft mbB
(86) International application number: PCT/CN2023/111595
(87) International publication number: WO 2024/131084

(57) **Abstract**

Embodiments of this disclosure disclose a fault processing method and apparatus for a video input/output system, a device, and a medium, including: obtaining fault information of the video input/output system; determining a target type and a target level of a current fault based on the fault information; and performing fault recovery processing corresponding to the target type on the current fault in response to that the target level is a first preset level. In the embodiments of this disclosure, a fault that can be rapidly self-recovered at an underlying layer can be recovered at the bottom layer, without being exposed to an upper-layer application for automated driving. Thus, a degradation in an automated driving function that is implemented by the upper-layer application on this basis is avoided, and users are not required to immediately take over a vehicle, thereby reducing mis-degradations of the automated driving function and improving user experience.

## Description

This disclosure claims priority to Chinese patent application No. CN202211637384.9, filed with the China National Intellectual Property Administration on December 19, 2022 and entitled "FAULT PROCESSING METHOD AND APPARATUS FOR VIDEO INPUT/OUTPUT SYSTEM, DEVICE, AND MEDIUM", which is incorporated herein by reference in its entirety.

### FIELD OF THE INVENTION

This disclosure relates to fault processing technologies, and in particular, to a fault processing method and apparatus for a video input/output system, a device, and a medium.

### BACKGROUND OF THE INVENTION

In the field of automated driving, automated driving behavior decision is one of key technologies for implementing automated driving functions. The automated driving behavior decision refers to a process in which an autonomous driving vehicle makes decisions on driving behaviors that are suitable for a current environment by perceiving surrounding environment information through sensors and matching the environment information with empirical knowledge in an automated driving library when comprehensively considering surrounding environments, obstacles, vehicle merging, yielding, and other rules. During automated driving, different types of faults such as hardware faults and software faults may occur to the sensors. As a result, the vehicle needs to degrade the automated driving function, resulting in poor driving experience for users.

### SUMMARY OF THE INVENTION

Embodiments of this disclosure provide a fault processing method and apparatus for a video input/output system, a device, and a medium, helping to reduce degradations in automated driving functions, thereby improving user experience.

According to an aspect of an embodiment of this disclosure, a fault processing method for a video input/output system is provided, including: obtaining fault information of the video input/output system; determining a target type and a target level of a current fault based on the fault information; and performing fault recovery processing corresponding to the target type on the current fault in response to that the target level is a first preset level.

According to another aspect of an embodiment of this disclosure, a fault processing apparatus for a video input/output system is provided, including: a first obtaining module, configured to obtain fault information of the video input/output system; a first determining module, configured to determine a target type and a target level of a current fault based on the fault information; and a first processing module, configured to perform fault recovery processing corresponding to the target type on the current fault in response to that the target level is a first preset level.

According to still another aspect of an embodiment of this disclosure, a computer readable storage medium is provided. The storage medium stores a computer program, and the computer program is used for implementing the fault processing method for a video input/output system according to any one of the foregoing embodiments of this disclosure.

According to yet another aspect of an embodiment of this disclosure, an electronic device is provided. The electronic device includes: a processor; and a memory configured to store processor-executable instruction. The processor is configured to read the executable instructions from the memory and execute the instructions to implement the fault processing method for a video input/output system according to any one of the foregoing embodiments of this disclosure.

Based on the fault processing method and apparatus for a video input/output system, the device, and the medium that are provided in the foregoing embodiments of this disclosure, faults of the video input/output system in automated driving are classified according to different levels. Minor faults, general faults, and single severe faults that occur in bottom-layer software and can be self-recovered at an underlying layer may be directly recovered at the bottom layer, without being exposed to an upper-layer application for automated driving. Thus, a degradation in an automated driving function that is implemented by the upper-layer application on this basis is avoided, and users are not required to immediately take over a vehicle, thereby helping to reduce mis-degradations of the automated driving function and improve user experience.

### BRIEF DESCRIPTION OF THE DRAWINGS

FIG. 1 is an exemplary application scenario of a fault processing method for a video input/output system according to this disclosure;
FIG. 2 is a schematic flowchart of a fault processing method for a video input/output system according to an exemplary embodiment of this disclosure;
FIG. 3 is a schematic flowchart of a fault processing method for a video input/output system according to another exemplary embodiment of this disclosure;
FIG. 4 is a schematic flowchart of a fault processing method for a video input/output system according to still another exemplary embodiment of this disclosure;
FIG. 5 is a schematic diagram of a structure of a fault processing apparatus for a video input/output system according to an exemplary embodiment of this disclosure;
FIG. 6 is a schematic diagram of a structure of a fault processing apparatus for a video input/output system according to another exemplary embodiment of this disclosure;
FIG. 7 is a schematic diagram of a structure of a first asynchronous fault processing module 507 according to an exemplary embodiment of this disclosure;
FIG. 8 is a schematic diagram of a structure of an apparatus according to another exemplary embodiment of this disclosure; and
FIG. 9 is a schematic diagram of a structure of an electronic device according to an application embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

### Overview of this disclosure

In a process of implementing this disclosure, the inventor finds that in the field of automated driving, automated driving behavior decision is one of key technologies for implementing automated driving functions. The automated driving behavior decision refers to a process in which an autonomous driving vehicle makes decisions on driving behaviors that are suitable for a current environment by perceiving surrounding environment information through sensors and matching the environment information with empirical knowledge in an automated driving library when comprehensively considering surrounding environments, obstacles, vehicle merging, yielding, and other rules. During automated driving, different types of faults such as hardware faults and software faults may occur, resulting in poor driving safety of the vehicle and poor driving experience for users.

### Exemplary overview

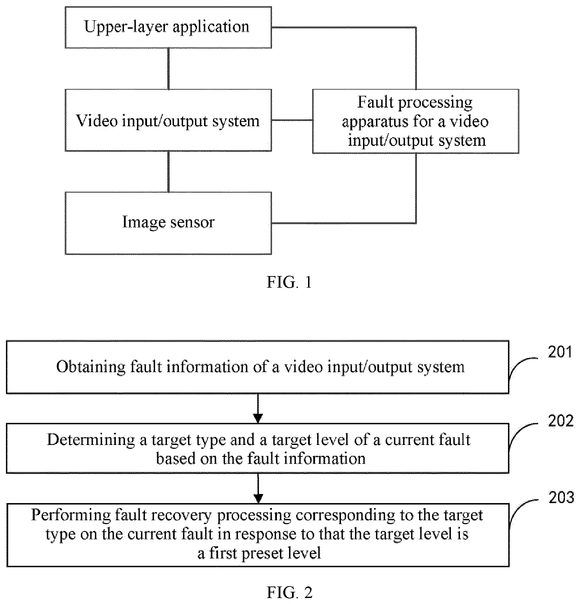

FIG. 1 is an exemplary application scenario of a fault processing method for a video input/output system according to this disclosure.

In a scenario of automated driving, raw data collected by an image sensor may be transmitted to a video input/output (VIO for short) system. The video input/output system may process the raw data to obtain processed image data, and may transmit the image data to an upper-layer application. The upper-layer application may perceive an environment based on the image data, used for decision-making and control of automated driving behaviors. The fault processing method for a video input/output system (executed in a fault processing apparatus for a video input/output system) in this disclosure may be used to monitor the video input/output system to obtain fault information of the video input/output system, and determine a target type and a target level of a current fault based on the fault information. The target type may include various faults that occur on an image transmission or processing path of the video input/output system, and various hardware physical faults (such as image sensor disconnection). The various faults that may occur on the image transmission or processing path may include, for example, a verification fault in a transmission process, a physical fault of an image transmission protocol (mipi), an image anomaly fault, a transmission image size mismatch fault, a memory write fault, a data acquisition failure fault, and a data frame loss fault, which may be specifically set according to actual requirements. The target level may be set according to actual requirements, and may include, for example, a minor level, a general level, a single severe level, and a fatal level. After the target type and the target level of the current fault are determined, in response to that the target level is a first preset level, fault recovery processing corresponding to the target type may be performed on the current fault. The first preset level refers to a level that may be self-recovered at a bottom layer, which may be set according to actual requirements. For example, the first preset level may be a minor level, and the target type may be a certain fault within software. In this case, only internal recovery is required to be performed on the current fault, without reporting to an upper-layer application. Thus, a degradation in an automated driving function that is implemented by the upper-layer application on this basis is avoided, and users are not required to immediately take over a vehicle, thereby helping to reduce mis-degradations of the automated driving function and improve user experience.

### Exemplary method

FIG. 2 is a schematic flowchart of a fault processing method for a video input/output system according to an exemplary embodiment of this disclosure. This embodiment may be applicable to an electronic device, such as an in-vehicle computing platform. As shown in FIG. 2, the method includes the following steps.

Step 201: Obtaining fault information of a video input/output system.

The video input/output (VIO for short) system (which may be referred to as a system for short) is a system used to process raw data collected by an image sensor to obtain image data. The video input/output system may include a hardware part and a software part. The hardware part may include hardware units for image processing, such as an ISP (image signal processing) unit, and the software part may include software that controls the hardware unit to complete image processing. This is not specifically limited. The fault information of the video input/output system may include a fault type, a fault level, fault occurrence time, an image link in which a fault occurs, fault description information, and other fault related information, which may be specifically set according to actual requirements. The fault type may include various faults that occur on an image transmission or processing path of the video input/output system, and various hardware physical faults (which may also be referred to as fatal faults, such as image sensor disconnection). The various faults that may occur on the image transmission or processing path may include, for example, a verification fault in a transmission process, a physical fault of an image transmission protocol (mipi), an image anomaly fault, a transmission image size mismatch fault, a memory write fault, a data acquisition failure fault, and a data frame loss fault, which may be specifically set according to actual requirements. The fault level may be set according to actual requirements, and may include, for example, a minor level, a general level, a single severe level, and a fatal level. The fault information may be obtained in any feasible way. For example, the system is provided with various fault detection and reporting functions. When a fault is detected, the corresponding fault may be reported to an apparatus, which may be specifically set according to actual requirements.

In an optional example, step 201 can be executed either by a processor invoking corresponding instructions stored in a memory, or by a first obtaining module that is run by the processor.

Step 202: Determining a target type and a target level of a current fault based on the fault information.

Correspondences between the fault information and the fault type and the fault level may be determined and stored in advance based on a fault that may actually occur. After the fault information is obtained, the target type and the target level of the current fault may be determined based on the fault information and the correspondences.

In an optional example, step 202 can be executed either by the processor invoking corresponding instructions stored in the memory, or by a first determining module that is run by the processor.

Step 203: Performing fault recovery processing corresponding to the target type on the current fault in response to that the target level is a first preset level.

The first preset level refers to a level that may be self-recovered at a bottom layer, which may be set according to actual requirements. For example, the first preset level may include at least one of a minor level, a general level, and a single severe level. When it is determined that the target level is the first preset level, it indicates that the current fault may be a fault that can be self-recovered. In this case, fault recovery processing corresponding to the target type may be performed on the current fault. For example, if the target type is a certain fault within bottom-layer software and may be automatically recovered through recovery software, fault recovery may be performed by controlling automatic recovery of the software at the bottom layer, without reporting to an upper-layer application.

In an optional example, step 203 can be executed either by the processor invoking corresponding instructions stored in the memory, or by a first processing module that is run by the processor.

According to the fault processing method for a video input/output system provided in this embodiment, faults of the video input/output system in automated driving are classified to different levels. Faults at the first preset level, such as minor faults, general faults, and single severe faults that occur in the bottom-layer software and can be self-recovered at the underlying layer may be directly recovered at the bottom layer, without being exposed to an upper-layer application for automated driving. Thus, a degradation in an automated driving function that is implemented by the upper-layer application on this basis is avoided, and users are not required to immediately take over a vehicle, thereby helping to reduce mis-degradations of the automated driving function and improve user experience.

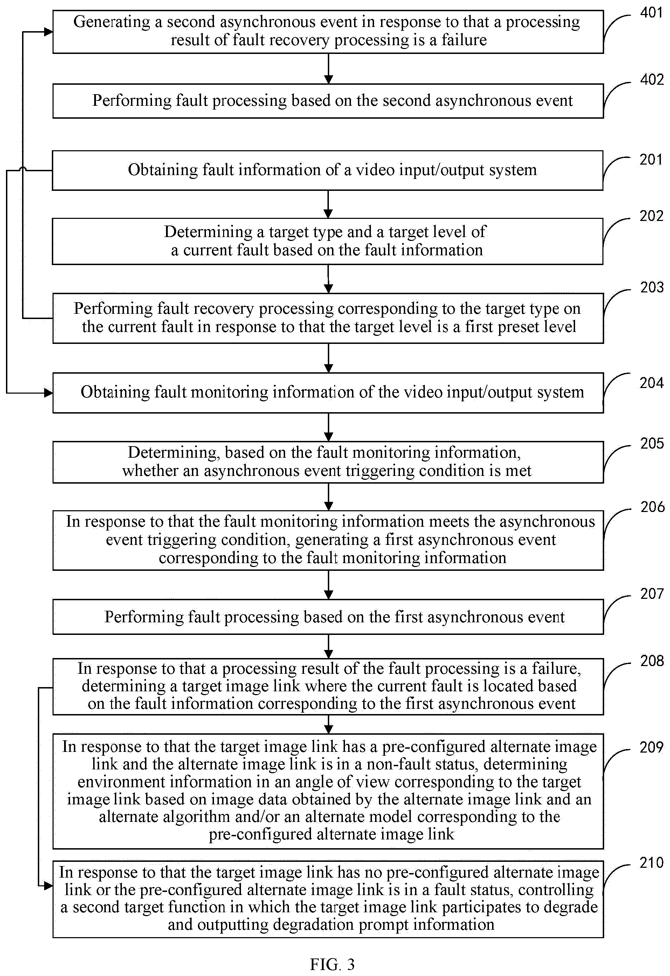

FIG. 3 is a schematic flowchart of a fault processing method for a video input/output system according to another exemplary embodiment of this disclosure.

In an optional example, the method in this embodiment of this disclosure may further include the following steps.

Step 204: Obtaining fault monitoring information of the video input/output system.

The fault monitoring information refers to information obtained by monitoring and recording or performing statistics collection on the fault occurring in the video input/output system. The fault monitoring information includes, but is not limited to, fault status information, fault types, and fault levels of various faults that have been monitored. The fault status information may include change information of fault statuses of the fault types. The fault statuses may include two statuses: fault occurring and fault cleared. Taking one fault type as an example, the change information of the fault status of this fault type may be represented, for example, by recorded time of different fault statuses of this fault type. In other words, the change information of the fault status of this fault type may include, for example, time when the fault status is the fault occurring status and time when the fault status is the fault cleared status. Based on the fault status information, occurrence of faults within a certain period of time may be determined, such as frequency of any type of fault.

In an optional example, step 204 can be executed either by the processor invoking corresponding instructions stored in the memory, or by a fault monitoring module that is run by the processor.

Step 205: Determining, based on the fault monitoring information, whether an asynchronous event triggering condition is met.

The asynchronous event triggering condition may be set according to actual requirements, and is used to determine whether an asynchronous event currently needs to be generated. Generation of the asynchronous event indicates that there is currently a fault that cannot be autonomously recovered at the bottom layer, which needs to be reported to the upper-layer application through the asynchronous event. For example, the asynchronous event triggering condition may include that fatal faults, a plurality of faults that occur frequently in a short period of time, system stability faults that occur frequently, or fault recovery processing failures are monitored. The fatal fault may be, for example, a physical fault, such as camera disconnection. The plurality of faults that occur frequently in a short period of time refer to a large quantity of faults that occur in a short period of time due to serious problems with an overall system. The system stability faults that occur frequently indicate that a same type of faults are constantly monitored due to stability issues of the system. The fault recovery processing failure refers to that fault recovery is not successfully completed on a fault that originally belongs to the first preset level when automatic fault recovery processing is performed on this fault at the bottom layer, resulting in an unresolved fault. Whether the asynchronous event triggering condition is met may be determined by matching the fault monitoring information with the asynchronous event triggering condition.

In an optional example, step 205 can be executed either by the processor invoking corresponding instructions stored in the memory, or by a second determining module that is run by the processor.

Step 206: In response to that the fault monitoring information meets the asynchronous event triggering condition, generating a first asynchronous event corresponding to the fault monitoring information.

If the fault monitoring information varies, different asynchronous events need to be generated, which may be specifically set according to actual requirements. For example, if the fault monitoring information indicates that a single fatal fault is detected, the first asynchronous event is a single fatal fault event; if the fault monitoring information indicates that a plurality of faults that occur frequently in a short period of time are detected, the corresponding first asynchronous event is a short-term frequent fault event; and if the fault monitoring information indicates that the system stability faults that occur frequently are detected, the corresponding first asynchronous event is a stability fault event.

In an optional example, step 206 can be executed either by the processor invoking corresponding instructions stored in the memory, or by a first generation module that is run by the processor.

Step 207: Performing fault processing based on the first asynchronous event.

Different fault processing manners may be set for different first asynchronous events, to resolve corresponding fault issues. For example, if the first asynchronous event is a single fatal fault event, fault processing corresponding to the single fatal fault event is performed. For example, it is controlled to output fault prompt information when the single fatal fault is a physical fault (such as camera disconnection) and the user needs to be prompted for processing; and if a fault type corresponding to the single fatal fault is a software fault, it may be controlled to restart corresponding software. This is not specifically limited.

In an optional example, step 207 can be executed either by the processor invoking corresponding instructions stored in the memory, or by a first asynchronous fault processing module that is run by the processor.

The fault occurring in the video input/output system is monitored in this embodiment of this disclosure. When it is monitored that autonomous recovery cannot be performed at the bottom layer, the upper-layer application may be quickly reported to in a real-time manner through the asynchronous event. The upper-layer application performs corresponding fault processing quickly to resolve the fault in a timely manner, thereby ensuring driving safety of the vehicle without affecting normal operation of the automated driving function. This helps to improve accuracy of degradation operations and further enhance user experience.

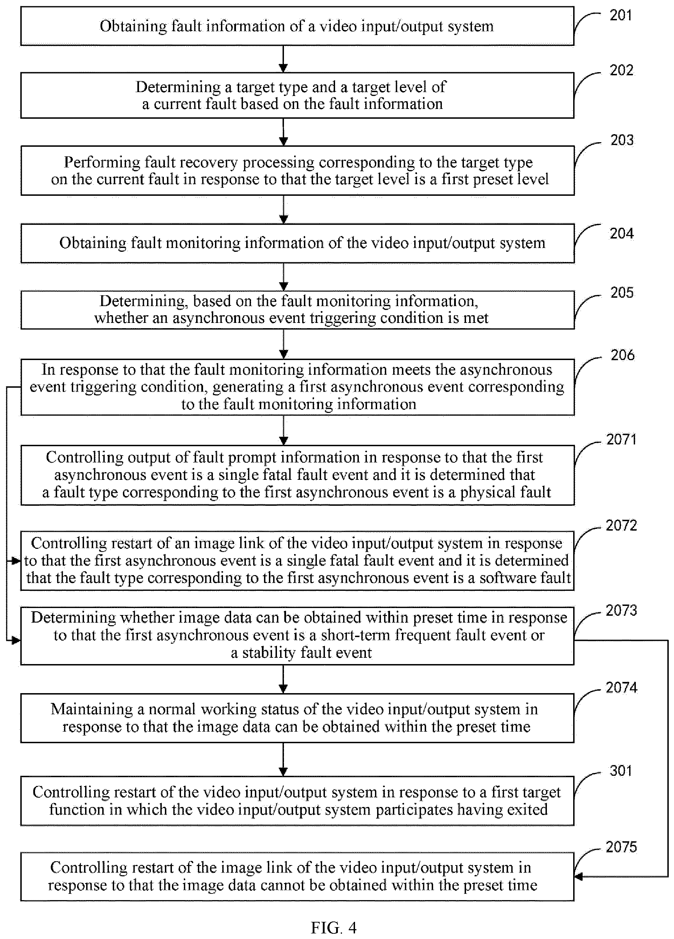

FIG. 4 is a schematic flowchart of a fault processing method for a video input/output system according to still another exemplary embodiment of this disclosure.

In an optional example, step 207 of performing fault processing based on the first asynchronous event includes the following steps.

Step 2071: Controlling output of fault prompt information in response to that the first asynchronous event is a single fatal fault event and it is determined that a fault type corresponding to the first asynchronous event is a physical fault.

The single fatal fault event may correspond to a single physical fault (such as image sensor disconnection) or a single software fault (such as a VIO link software fault). For different single fatal fault events, different fault processing manners may be adopted. For the first asynchronous event with the fault type of a physical fault, it indicates that current software cannot be automatically recovered and physical recovery is required. Therefore, diagnosis and reporting may be performed, and the user may be prompted for manual recovery.

In an optional example, step 2071 can be executed either by the processor invoking corresponding instructions stored in the memory, or by a first processing unit that is run by the processor.

Step 2072: Controlling restart of an image link of the video input/output system in response to that the first asynchronous event is a single fatal fault event and it is determined that the fault type corresponding to the first asynchronous event is a software fault.

The image link of the video input/output system (VIO link for short) is a processing link for image signal processing in the video input/output system. Raw data collected by image sensors (cameras) in various angles of view on the vehicle may be processed by the video input/output system to obtain image data required for different functions in the future. Each angle of view may correspond to at least one VIO link, and each VIO link may be responsible for completing image processing on the raw data of the image sensor in the angle of view corresponding to that VIO link, to obtain the corresponding image data. A single fatal fault event of the software fault indicates that a fault that cannot be quickly self-recovered occurs on the current VIO link, and thus image data cannot be obtained. Fault recovery may be performed through operations such as resetting. Therefore, fault recovery may be implemented by controlling restart of the image link of the video input/output system.

In an optional example, step 2072 can be executed either by the processor invoking corresponding instructions stored in the memory, or by a second processing unit that is run by the processor.

Step 2073: Determining whether image data can be obtained within preset time in response to that the first asynchronous event is a short-term frequent fault event or a stability fault event.

The preset time may be set according to actual requirements, for example, may include current time and prior time with certain duration before the current time, which is not specifically limited. Whether the image data can be obtained may be determined by monitoring an image data acquisition result of the upper-layer application. For example, it may be set that the upper-layer application returns an acquisition result to an apparatus in embodiments of this disclosure each time after the image data is obtained, or the apparatus in embodiments of this disclosure may request to obtain an acquisition result from the upper-layer application. This may be specifically set according to actual requirements.

In an optional example, step 2073 can be executed either by the processor invoking corresponding instructions stored in the memory, or by a third processing unit that is run by the processor.

Step 2074: Maintaining a normal working status of the video input/output system in response to that the image data can be obtained within the preset time.

If the image data can be obtained within the preset time, it indicates that although an asynchronous event mechanism is triggered, the current system has restored to normal or the system is only occasionally unstable. If an automated driving related function (such as an automated driving behavior decision function) is currently running, the normal working status of the video input/output system may be temporarily maintained, thereby ensuring that the automated driving related function is kept running.

In an optional example, step 2074 can be executed either by the processor invoking corresponding instructions stored in the memory, or by a fourth processing unit that is run by the processor.

Step 2075: Controlling restart of the image link of the video input/output system in response to that the image data cannot be obtained within the preset time.

If the image data cannot be obtained within the preset time, it indicates that a fault that cannot be quickly self-recovered occurs in the current system. Fault recovery may be performed through operations such as resetting. Therefore, controlling the restart of the image link of the video input/output system helps to resolve the fault.

In an optional example, step 2075 can be executed either by the processor invoking corresponding instructions stored in the memory, or by a fifth processing unit that is run by the processor.

In this embodiment of this disclosure, for different asynchronous events, faults can be resolved through corresponding fault processing manners. Normal operation of the video input/output system may be maintained without affecting the automated driving function, so that the automated driving function can run normally without function degradation, which helps to improve accuracy of degradation operations and further enhance user experience.

In an optional example, after step 2074 of maintaining a normal working status of the video input/output system in response to that the image data can be obtained within the preset time, the method in this embodiment of this disclosure may further include:

Step 301: Controlling restart of the video input/output system in response to a first target function in which the video input/output system participates having exited.

The first target function may be any function, such as the automated driving behavior decision function, in automated driving that requires to obtain the image data from the video input/output system, which is not specifically limited. After the first asynchronous event that is a short-term frequent fault event or a stability fault event in the system is triggered, if it is determined that the image data can be obtained normally within the preset time, the normal working status of the video input/output system may be maintained without restarting the video input/output system, so that the first target function in which the video input/output system participates can work normally without being degraded. Restarting the video input/output system in response to the first target function having exited can avoid affecting the first target function. In this case, the restart of the video input/output system may be controlled, which helps to avoid occurrence of faults corresponding to asynchronous events (including the short-term frequent fault event or the stability fault event) that are triggered earlier, so that the video input/output system can operate safely in the future, thereby further improving driving safety of the vehicle.

In an optional example, step 301 can be executed either by the processor invoking corresponding instructions stored in the memory, or by a sixth processing unit that is run by the processor.

In an optional example, after step 207 of performing fault processing based on the first asynchronous event, the method further may include the following steps.

Step 208: In response to that a processing result of the fault processing is a failure, determining a target image link where the current fault is located based on the fault information corresponding to the first asynchronous event.

If the processing result of the fault processing is a failure, it indicates that an unrecoverable fault occurs on the target image link where the current fault is located. The target image link where the current fault is located may be determined based on an image link on which the fault included in the fault information corresponding to the first asynchronous event occurs.

In an optional example, step 208 can be executed either by the processor invoking corresponding instructions stored in the memory, or by a second processing module that is run by the processor.

Step 209: In response to that the target image link has a pre-configured alternate image link and the alternate image link is in a non-fault status, determining environment information in an angle of view corresponding to the target image link based on image data obtained by the alternate image link and an alternate algorithm and/or an alternate model corresponding to the pre-configured alternate image link.

A corresponding alternate image link may be pre-configured for the image link. For example, an image link corresponding to a front-view camera may be replaced with image links corresponding to a left-front-view camera and a right-front-view camera. That is, image data in a front-view perspective range may be determined from the image data in the front-view perspective range covered by the combined a left-front-view image with a right-front-view image, to continue to participate in functions in various automated driving functions that require front-view image data, so that corresponding automated driving functions may continue running without being degraded. The specific alternate image link may be set according to actual requirements. The alternate image link may have two statuses: a non-fault status and a fault status. In practical application, the specific status of the alternate image link may be determined based on a fault status of the image link that is maintained in a real-time manner. For example, the status of the image link may be maintained in a real-time manner based on the fault information and the fault monitoring information, which may be specifically set according to actual requirements. The alternate algorithm and/or the alternate model corresponding to the alternate image link refers to a perception algorithm or a perception model for environment perception based on the image data obtained by the alternate image link, which may be specifically set according to actual requirements. For example, the perception model may include an object detection model and a semantic segmentation model that are pre-trained, which is not specifically limited. Based on the corresponding alternate algorithm and/or alternate model, environment information in an angle of view corresponding to the target image link may be extracted from the image data obtained by the alternate image link. Therefore, functions of the target image link may be completed based on the alternate image link and the corresponding algorithm model.

In an optional example, step 209 can be executed either by the processor invoking corresponding instructions stored in the memory, or by a third processing module that is run by the processor.

In this embodiment of this disclosure, when fault processing for any target image link fails at the upper-layer application, the functions of the target image link may be replaced by using the alternate image link, so that the automated driving function in which the target image link participates can continue running without being degraded, thereby helping to further improve the accuracy of the degradation operations and further enhancing the user experience.

In an optional example, during the alternate image link is running, the target image link does indeed have a fault and cannot be recovered, and an effect of an alternative solution may differ from that of the target image link. Therefore, when the alternate image link is used, output of fault alarm information may be controlled to prompt the user of a problem in the current system.

In an optional example, the automated driving functions may also be controlled at different levels based on levels of replacement effects of the alternate image link, such as allowing the user to partially take over driving while retaining some automated driving functions. This may be specifically set according to actual requirements.

In an optional example, the method in this embodiment of this disclosure may further include:

Step 210: In response to that the target image link has no pre-configured alternate image link or the pre-configured alternate image link is in a fault status, controlling a second target function in which the target image link participates to degrade and outputting degradation prompt information.

The second target function is a function, among the automated driving functions, in which the target image link participates, such as the automated driving behavior decision function. If the target image link does not have the pre-configured alternate image link or the pre-configured alternate image link is in the fault status, it may indicate that function replacement has failed. In this case, to ensure safe driving of the vehicle, the second target function in which the target image link participates may be controlled to degrade, and degradation prompt information may be output to prompt the user to take over driving in a timely manner, which helps to avoid traffic accidents.

In an optional example, step 210 can be executed either by the processor invoking corresponding instructions stored in the memory, or by a fourth processing module that is run by the processor.

In this embodiment of this disclosure, after a situation where the automated driving function can continue running is excluded, the automated driving function may be degraded, which helps to reduce false triggering of degradation operations, thereby improving user experience.

In an optional example, after step 203 of performing fault recovery processing corresponding to the target type on the current fault in response to that the target level is a first preset level, the method in this embodiment of this disclosure may further include the following steps.

Step 401: Generating a second asynchronous event in response to that a processing result of the fault recovery processing is a failure.

The second asynchronous event may be a fault recovery processing failure event. If the current fault at the first preset level cannot be recovered, it may indicate that the fault recovery processing result is a failure. The second asynchronous event is similar to the first asynchronous event, and is used to trigger fault processing of the upper-layer application. Details are not described herein.

In an optional example, step 401 can be executed either by the processor invoking corresponding instructions stored in the memory, or by a second generation module that is run by the processor.

Step 402: Performing fault processing based on the second asynchronous event.

If the current fault cannot be self-recovered, it may be controlled through the upper-layer application to perform the fault processing, such as controlling the restart of the video input/output system. This may be specifically set according to actual requirements.

In this embodiment of this disclosure, for a situation where a fault at the first preset level cannot be self-recovered, the asynchronous event mechanism may also be used to quickly report to the upper-layer application in a real-time manner, and the upper-layer application quickly performs fault processing to resolve the fault in a timely manner.

In an optional example, step 402 can be executed either by the processor invoking corresponding instructions stored in the memory, or by a second asynchronous fault processing module that is run by the processor.

In an optional example, step 402 of performing fault processing based on the second asynchronous event includes: controlling restart of an image link of the video input/output system in response to that the second asynchronous event is a fault recovery processing failure event.

For a fault that cannot be self-recovered, the upper-layer application may resolve the current fault by controlling the restart of the image link of the video input/output system, so that the image link can quickly restore normal functions. Thus, the automated driving function can run normally.

In an optional example, an asynchronous fault processing application may be set in the upper-layer application (which may also be referred to as an upper-layer asynchronous fault processing application or an upper-layer asynchronous fault processing module) to respond to asynchronous events and quickly perform corresponding fault processing at the upper layer. The asynchronous events may include the first asynchronous event, the second asynchronous event, and other asynchronous events set according to actual requirements.

In this embodiment of this disclosure, by classifying faults according to levels and types, a software fault collection and monitoring function may be implemented in a bottom-layer system, which helps to shield reporting of most faults that can be quickly self-recovered. Moreover, based on the collected fault monitoring information, asynchronous reporting of the fault that cannot be self-recovered may be implement through the asynchronous event mechanism, so as to perform real-time and quick processing on asynchronous event faults. Moreover, when fault processing fails or fault self-recovery fails, function replacement may be implemented through the alternate image link to enable the automated driving function to continue running, which helps to reduce a degradation rate of the automated driving function and improve user experience.

The embodiments or the optional examples in this disclosure may be implemented separately or in any combination without conflict. This may be specifically set according to actual requirements.

Any fault processing method for a video input/output system provided in the embodiments of this disclosure may be implemented by any suitable device with a data processing capability, including but not limited to a terminal device and a server. Alternatively, any fault processing method for a video input/output system provided in the embodiments of this disclosure may be implemented by the processor. For example, the processor implements any fault processing method for a video input/output system described in the embodiments of this disclosure by invoking corresponding instructions stored in the memory. Details are not described below.

Persons of ordinary skills in the art may understand that: all or some of the steps for implementing the foregoing method embodiments may be completed through hardware related to program instructions. A program may be stored in a computer readable storage medium. During execution, the program performs the steps including the foregoing method embodiments. Storage media include various media that may store program code, such as a ROM, a RAM, a magnetic disk, or a compact disc.

### Exemplary apparatus

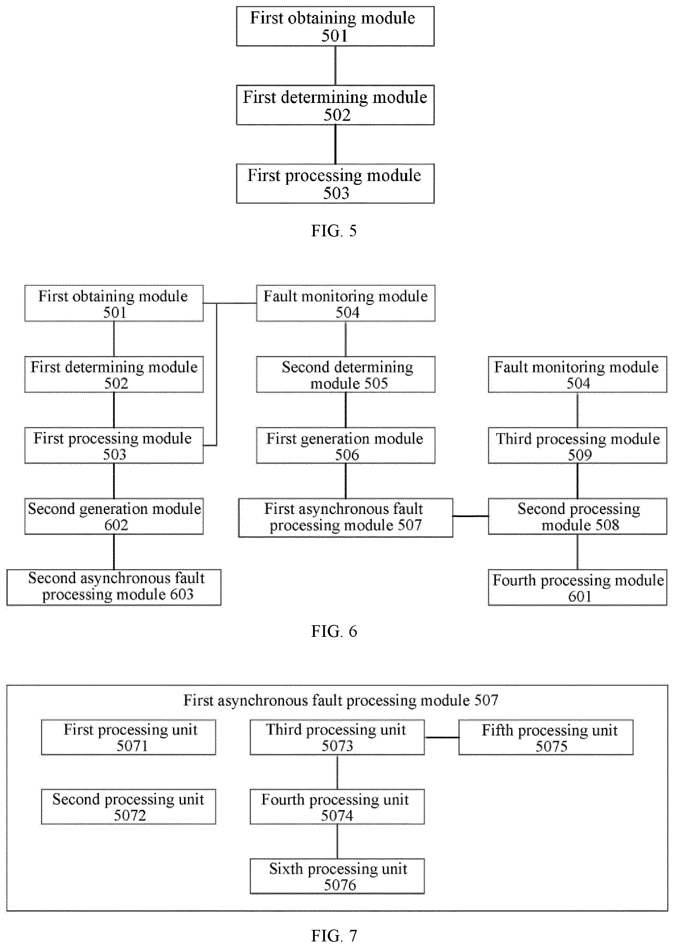

FIG. 5 is a schematic diagram of a structure of a fault processing apparatus for a video input/output system according to an exemplary embodiment of this disclosure. The apparatus in this embodiment may be configured to implement the corresponding method embodiments of this disclosure. The apparatus shown in FIG. 5 includes a first obtaining module 501, a first determining module 502, and a first processing module 503.

The first obtaining module 501 is configured to obtain fault information of the video input/output system. The first determining module 502 is configured to determine a target type and a target level of a current fault based on the fault information. The first processing module 503 is configured to perform fault recovery processing corresponding to the target type on the current fault in response to that the target level is a first preset level.

FIG. 6 is a schematic diagram of a structure of a fault processing apparatus for a video input/output system according to another exemplary embodiment of this disclosure.

In an optional example, the apparatus in this embodiment of this disclosure further includes:

a fault monitoring module 504, configured to obtain fault monitoring information of the video input/output system; a second determining module 505, configured to determine, based on the fault monitoring information, whether an asynchronous event triggering condition is met; a first generation module 506, configured to generate a first asynchronous event corresponding to the fault monitoring information and report to a first asynchronous fault processing module in response to that the fault monitoring information meets the asynchronous event triggering condition; and a first asynchronous fault processing module 507, configured to perform fault processing based on the first asynchronous event.

FIG. 7 is a schematic diagram of a structure of a first asynchronous fault processing module 507 according to an exemplary embodiment of this disclosure.

In an optional example, the first asynchronous fault processing module 507 includes:

a first processing unit 5071, configured to control output of fault prompt information in response to that the first asynchronous event is a single fatal fault event and it is determined that a fault type corresponding to the first asynchronous event is a physical fault; a second processing unit 5072, configured to control restart of an image link of the video input/output system in response to that the first asynchronous event is a single fatal fault event and it is determined that the fault type corresponding to the first asynchronous event is a software fault; a third processing unit 5073, configured to determine whether image data can be obtained within preset time in response to that the first asynchronous event is a short-term frequent fault event or a stability fault event; a fourth processing unit 5074, configured to maintain a normal working status of the video input/output system in response to that the image data can be obtained within the preset time; and a fifth processing unit 5075, configured to control restart of the image link of the video input/output system in response to that the image data cannot be obtained within the preset time.

In an optional example, the apparatus in this embodiment of this disclosure further includes: a sixth processing unit 5076, configured to control restart of the video input/output system in response to a first target function in which the video input/output system participates having exited.

In an optional example, the apparatus in this embodiment of this disclosure further includes:

a second processing module 508, configured to determine, in response to that a processing result of the fault processing is a failure, a target image link where the current fault is located based on the fault information corresponding to the first asynchronous event; and a third processing module 509, configured to determine, in response to that the target image link has a pre-configured alternate image link and the alternate image link is in a non-fault status, environment information in an angle of view corresponding to the target image link based on image data obtained by the alternate image link and an alternate algorithm and/or an alternate model corresponding to the pre-configured alternate image link.

In an optional example, the apparatus in this embodiment of this disclosure further includes: a fourth processing module 601, configured to control, in response to that the target image link has no pre-configured alternate image link or the pre-configured alternate image link is in a fault status, a second target function in which the target image link participates to degrade and output degradation prompt information.

In an optional example, the apparatus in this embodiment of this disclosure further includes:

a second generation module 602, configured to generate a second asynchronous event in response to that a processing result of the fault recovery processing is a failure; and a second asynchronous fault processing module 603, configured to perform fault processing based on the second asynchronous event.

The second asynchronous fault processing module 603 and the first asynchronous fault processing module 507 may be a same module or two independent modules, which may be specifically set according to actual requirements.

In an optional example, the second asynchronous fault processing module 603 is specifically configured to control restart of an image link of the video input/output system in response to that the second asynchronous event is a fault recovery processing failure event.

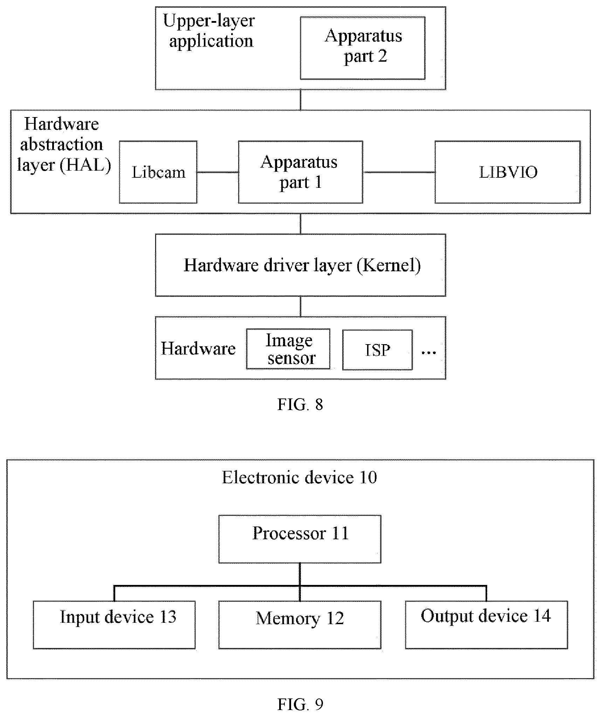

In an optional example, FIG. 8 is a schematic diagram of a framework of an automated driving behavior decision function system according to an exemplary embodiment of this disclosure. In this example, the automated driving behavior decision function system may include an upper-layer application, a hardware abstraction layer, a hardware driver layer, and a hardware part. The fault processing method for a video input/output system in the embodiments of this disclosure is completed by disposing the fault processing apparatus for a video input/output system in the embodiments of this disclosure at the hardware abstraction layer and the upper-layer application. The apparatus may include an apparatus part 1 and an apparatus part 2. The apparatus part 1 may include the first obtaining module, the first determining module, the first processing module, the fault monitoring module, the second determining module, the first generation module, and the second generation module that are described above, and is disposed at the hardware abstraction layer. The apparatus part 2 may include the first asynchronous fault processing module and the second asynchronous fault processing module that are described above, and is disposed at the upper-layer application. In addition to the apparatus part 2 in this embodiment of this disclosure, the upper-layer application may also include various upper-layer applications of automated driving functions, such as a perception application for environment perception based on image data. Details are not described herein. Hardware may include an image sensor, an ISP unit for signal processing on raw data collected by the image sensor, and various hardware processing units for image processing on the image data. The hardware driver layer includes software programs for driving the hardware. The hardware abstraction layer is a software library related to commonalities, of various hardware drivers, that are abstracted based on the hardware driver layer. Libcam represents a software library related to the image sensor (camera). LIBVIO represents a software library related to the VIO system. Modules in the apparatus part 1 monitor hardware and software related faults of the image sensor and the VIO system, and record and perform statistics collection. For faults that can be autonomously and quickly recovered at the bottom layer, the apparatus part 1 may control or indirectly control autonomous and fast recovery at the bottom layer. For monitored faults that cannot be autonomously and quickly recovered at the bottom layer, asynchronous events (including the first asynchronous event and the second asynchronous event) may be generated in a real-time manner, and the apparatus part 2 of the upper-layer application may be quickly reported to in a real-time manner through an asynchronous mechanism. Modules in the apparatus part 2 may be responsible for responding to asynchronous events and quickly performing corresponding asynchronous fault processing in a real-time manner at the upper layer, such as controlling restart of the VIO system and controlling the alternate image link to replace the faulty target image link, so that the automated driving function can run normally. When it is determined that the fault processing fails and function replacement cannot be performed or there are other faults that cannot be resolved, diagnosis and reporting may be performed, so as to control corresponding autonomous driving functions to degrade. Moreover, users may be prompted. For specific processing for various situations, refer to the content described above, and details are not described herein again.

For beneficial technical effects corresponding to the exemplary embodiments of this apparatus, reference may be made to the corresponding beneficial technical effects in the section of exemplary method described above, and details are not described herein again.

### Exemplary electronic device

FIG. 9 is a schematic diagram of a structure of an electronic device according to an application embodiment of this disclosure. In this embodiment, an electronic device 10 includes one or more processors 11 and a memory 12.

The processor 11 may be a central processing unit (CPU) or another form of processing unit having a data processing capability and/or an instruction execution capability, and may control other components in the electronic device 10 to implement desired functions.

The memory 12 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute the one or more program instructions to implement the method according to various embodiments of this disclosure that are described above and/or other desired functions.

In an example, the electronic device 10 may further include an input device 13 and an output device 14. These components are connected to each other through a bus system and/or another form of connection mechanism (not shown).

In addition, the input device 13 may further include, for example, a keyboard and a mouse.

The output device 14 may output various information to the outside. The output device 14 may include, for example, a display, a speaker, a printer, a communication network, and a remote output device connected by the communication network.

Certainly, for simplicity, FIG. 9 shows only some of components in the electronic device 10 that are related to this disclosure, and components such as a bus and an input/output interface are omitted. In addition, according to specific application situations, the electronic device 10 may further include any other appropriate components.

### Exemplary computer program product and computer readable storage medium

In addition to the foregoing method and device, embodiments of this disclosure may also provide a computer program product, which includes computer program instructions. When the computer program instructions are run by a processor, the processor is enabled to perform the steps, of the method according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A fault processing method for a video input/output system, comprising:
obtaining fault information of the video input/output system;
determining a target type and a target level of a current fault based on the fault information; and
performing fault recovery processing corresponding to the target type on the current fault in response to that the target level is a first preset level.

2. The method according to claim 1, further comprising:
obtaining fault monitoring information of the video input/output system;
determining, based on the fault monitoring information, whether an asynchronous event triggering condition is met;
in response to that the fault monitoring information meets the asynchronous event triggering condition, generating a first asynchronous event corresponding to the fault monitoring information; and
performing fault processing based on the first asynchronous event.

3. The method according to claim 2, wherein the performing fault processing based on the first asynchronous event comprises:
controlling output of fault prompt information in response to that the first asynchronous event is a single fatal fault event and it is determined that a fault type corresponding to the first asynchronous event is a physical fault;
controlling restart of an image link of the video input/output system in response to that the first asynchronous event is a single fatal fault event and it is determined that the fault type corresponding to the first asynchronous event is a software fault;
determining whether image data can be obtained within preset time in response to that the first asynchronous event is a short-term frequent fault event or a stability fault event;
maintaining a normal working status of the video input/output system in response to that the image data can be obtained within the preset time; and
controlling restart of the image link of the video input/output system in response to that the image data cannot be obtained within the preset time.

4. The method according to claim 3, wherein after the maintaining a normal working status of the video input/output system in response to that the image data can be obtained within the preset time, the method further comprises:
controlling restart of the video input/output system in response to a first target function in which the video input/output system participates having exited.

5. The method according to claim 2, wherein after the performing fault processing based on the first asynchronous event, the method further comprises:
in response to that a processing result of the fault processing is a failure, determining a target image link where the current fault is located based on the fault information corresponding to the first asynchronous event; and
in response to that the target image link has a pre-configured alternate image link and the alternate image link is in a non-fault status, determining environment information in an angle of view corresponding to the target image link based on image data obtained by the alternate image link and an alternate algorithm and/or an alternate model corresponding to the pre-configured alternate image link.

6. The method according to claim 5, further comprising:
in response to that the target image link has no pre-configured alternate image link or the pre-configured alternate image link is in a fault status, controlling a second target function in which the target image link participates to degrade and outputting degradation prompt information.

7. The method according to claim 1, wherein after the performing fault recovery processing corresponding to the target type on the current fault in response to that the target level is a first preset level, the method further comprises:
generating a second asynchronous event in response to that a processing result of the fault recovery processing is a failure; and
performing fault processing based on the second asynchronous event.

8. The method according to claim 7, wherein the performing fault processing based on the second asynchronous event comprises:
controlling restart of an image link of the video input/output system in response to that the second asynchronous event is a fault recovery processing failure event.

9. A fault processing apparatus for a video input/output system, comprising:
a first obtaining module, configured to obtain fault information of the video input/output system;
a first determining module, configured to determine a target type and a target level of a current fault based on the fault information; and
a first processing module, configured to perform fault recovery processing corresponding to the target type on the current fault in response to that the target level is a first preset level.

10. A computer readable storage medium, wherein the storage medium stores a computer program, and the computer program is used for implementing the fault processing method for a video input/output system according to any one of claims 1 to 8.

11. An electronic device, wherein the electronic device comprises:
a processor; and
a memory, configured to store processor-executable instructions, wherein
the processor is configured to read the executable instructions from the memory, and execute the instructions to implement the fault processing method for a video input/output system according to any one of claims 1 to 8.
